# EUROPEAN PATENT SPECIFICATION

(11) **EP 4 321 477 B1**
(45) Date of publication and mention of the grant of the patent: **12.03.2025**
(21) Application number: 23184588.4
(22) Date of filing: 11.07.2023
(51) Int. Cl.: C01B 3/08

(54) **FUEL PRECURSOR**
KRAFTSTOFFVORLÄUFER
PRÉCURSEUR DE COMBUSTIBLE

(30) Priority: 11.08.2022 GB 202211758
(43) Date of publication of application: 14.02.2024
(73) Proprietor: Rolls-Royce plc, London N1 9FX (GB)
(72) Inventor: Wild, Sarah, Derby, DE24 8BJ (GB)
(74) Representative: Rolls-Royce plc

(56) References cited:
- WO-A1-02/066369
- WO-A1-2009/088134
- WO-A1-2019/023123
- CN-A- 110 065 927
- US-A1- 2009 267 023
- US-A1- 2022 203 437
- FISCHMAN JASON ET AL: "Hydrogen generation via the reaction of an activated aluminum slurry with water", INTERNATIONAL JOURNAL OF HYDROGEN ENERGY, ELSEVIER, AMSTERDAM, NL, vol. 45, no. 35, 15 May 2020 (2020-05-15), pages 17118 - 17130, XP086204881, ISSN: 0360-3199, [retrieved on 20200515], DOI: 10.1016/J.IJHYDENE.2020.04.161

## Description

### Field of the disclosure

The present invention relates to a fuel precursor for producing hydrogen fuel by reacting aluminium and water.

### Background

Due to increased energy demand and concerns around climate change and air pollution, hydrogen fuel cell technology is an increasingly popular method for electricity generation. The energy density of hydrogen is around 200 times greater than that of a lithium ion battery. However, hydrogen storage for portable devices is an ongoing challenge as compressed gas cylinders are large.

Aluminium can react with water to generate hydrogen in situ, for example according to the following reaction:

*2Al +* 6*H*₂*O* → 3*H*₂ *+ 2Al*(*OH)*₃

The hydrogen can then in turn be used to power a fuel cell to generate electricity. Power modules using such technology could be used to power vehicles on land, in the air, and in marine environments.

However, a naturally occurring oxide layer on the surface of aluminium typically prevents aluminium from reacting with water.

Work has been done to find methods for bypassing the oxide layer and allowing the aluminium to react. See for example in J. Petrovic and G. Thomas, Reaction of Aluminum with Water to Produce Hydrogen: A Study of Issues Related to the Use of Aluminum for On-Board Vehicular Hydrogen Storage. US Department of Energy, Version 2, 2010: https://www1.eere.energy.gov/hydrogenandfuelcells/pdfs/aluminium_water_hydrogen.pdf

One approach, discussed for example in J T. Slocum, T.W. Eagar, R. Taylor and D.P. Hart, Activation of bulk aluminum and its application in a hydrogen generator, Applied Energy, Volume 279, 1 December 2020, is to "activate" aluminium BB (ball bearing) pellets by using a gallium-indium eutectic melt to break down the grain boundary structure and to make the internal aluminium accessible to react with water.

However, the gallium-indium eutectic is expensive. Moreover, handling solid aluminium pellets presents challenges when designing a loading mechanism for the activated pellets. In particular, the activated balls are brittle, and so are liable to fracture. In addition, spherical balls have a packing density of approximately 64%, making relatively inefficient use of space.

The present invention has been devised in light of the above considerations.

### Summary

In a first aspect, the present disclosure provides a fuel precursor for producing hydrogen fuel by reacting aluminium and water, the fuel precursor having aluminium particles suspended in a hydrophobic liquid such that when the fuel precursor is introduced to water, the suspended aluminium particles migrate to the water and react therewith to produce hydrogen, wherein:
the suspended aluminium particles are non-spherical, angular particles; and
the surfaces of the suspended aluminium particles have substantially no oxide layer thereon.

Advantageously, the suspended aluminium particles, being substantially without an oxide layer, can react with water to produce hydrogen without recourse to activation, for example by a gallium-indium eutectic melt. Moreover, being non-spherical and angular particles, higher aluminium loadings in the fuel precursor can be achieved than with spherical pellets.

The aluminium can be pure aluminium, or an aluminium alloy which is suitably reactive with water.

Conveniently, the suspended aluminium particles may be produced by wet-ball milling aluminium feedstock particles. For example, the wet-ball milling may be performed under an inert atmosphere that substantially prevents an oxide layer forming on the fresh aluminium surfaces produced by the wet-ball milling. The inert atmosphere may be an argon or nitrogen atmosphere, or a mixed argon/nitrogen atmosphere. Conveniently, the liquid wet-ball milling may be performed using a solvent which is the hydrophobic liquid of the liquid fuel-precursor. In this way, after wet-ball milling, a desired loading of particles in the fuel precursor can be achieved simply by adding more hydrophobic liquid or removing solvent.

Preferably the suspended aluminium particles are nanoparticles, i.e. substantially all of the suspended particles may have a diameter of 100 nm or less. This increases the surface to volume ratio of the particles, and thus increases the amount of hydrogen that can be formed from a given particle before the surface of the particles is passivated.

The suspended aluminium particles may have a volume loading relative to the total volume of aluminium particles and hydrophobic liquid of at least 35%. Preferably the volume loading is at least 65%, and more preferably at least 70% or 75%, to provide a higher packing density than uniformly-sized spherical particles. Nonetheless, lower volume loadings, e.g. in the range 35% to 65%, may also provide a fuel precursor with a useful energy density in terms of amount of hydrogen producible therefrom, while giving the fuel precursor better handling characteristics than higher loadings. The volume loading in the hydrophobic liquid may be at most 85% or 80% to ensure that the fuel precursor can flow as a liquid. At higher loadings than this, the particles may effectively cease to be suspended in the liquid, the fuel precursor solidifying into a wet granular agglomerate.

The hydrophobic liquid may have a boiling point of at least 60°C. In this way, it can be readily volatilised by the exothermic reaction of aluminium with water, and removed from the reaction zone along with the produced hydrogen, thereby preventing its build up in the reaction zone.

The hydrophobic liquid may have a boiling point of at most 100°C. In this way, it can be readily condensed out of and separated from the produced hydrogen.

The hydrophobic liquid may be mineral oil, ethylene glycol, hexane or ethyl acetate.

In a second aspect, the present disclosure provides a method of producing the fuel precursor of the first aspect, the method including:
providing a mixture of aluminium feedstock particles in a solvent which is a hydrophobic liquid; and
wet ball milling the mixture under an inert atmosphere to produce the fuel precursor in which non-spherical, angular aluminium particles are suspended in the hydrophobic liquid, the suspended aluminium particles having substantially no oxide layer thereon.

The method of the second aspect may further include:
adding or removing hydrophobic liquid to adjust the loading of the suspended aluminium particles in the hydrophobic liquid.

In a third aspect, the present disclosure provides a method of producing hydrogen fuel including:
providing the fuel precursor of the first aspect; and
introducing the fuel precursor to water, such that the aluminium particles migrate to the water and react therewith to produce hydrogen.

In the method of the third aspect, the hydrophobic liquid may be volatilised when the fuel precursor is introduced to water, and the method may further include:
removing a mixture of the produced hydrogen and the volatilised hydrophobic liquid; and
condensing the hydrophobic liquid to remove it from the mixture.

The invention includes the combination of the aspects and preferred features described except where such a combination is clearly impermissible or expressly avoided.

### Brief description of the drawings

Embodiments illustrating the principles of the invention will now be discussed with reference to the accompanying figures in which:

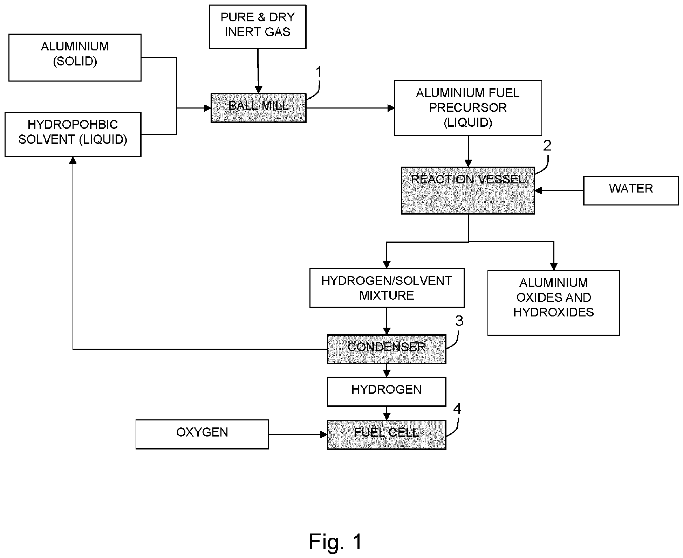

**Figure 1** shows a process flow chart for producing the liquid fuel precursor and using hydrogen fuel produced from the precursor in a fuel cell.

### Detailed description

Aspects and embodiments of the present invention will now be discussed with reference to the accompanying figures. Further aspects and embodiments will be apparent to those skilled in the art. All documents mentioned in this text are incorporated herein by reference.

A fuel precursor for producing hydrogen fuel by reacting aluminium and water is provided. The fuel precursor has aluminium particles suspended in a hydrophobic liquid. When the fuel precursor is introduced to water, the suspended aluminium particles migrate to the water and react therewith to produce hydrogen and heat according to the exothermic reaction:

*2Al +* 6*H*₂O → 3*H*₂ *+ 2Al*(*OH*)₃

The hydrogen can then be used in a downstream process, such as a fuel cell for the generation electricity, which in turn can be used to power electrical devices, such as vehicle propulsion motors. Depending on the application, use can generally also be made of the heat generated by the reaction. The produced aluminium hydroxide can be collected and recycled, if desired, back into aluminium production processes.

The surfaces of the suspended aluminium particles in the fuel precursor have substantially no oxide layer thereon. Normally, in air, these surfaces would oxidise immediately to form a thin but highly tenacious aluminium oxide layer, which arrests further oxidation of the particles and prevents the underlying aluminium reacting with water. However, being entirely immersed in the hydrophobic liquid, the suspended aluminium particles have no opportunity to form oxide layers, and can be stored for lengthy periods while retaining their ability to react with water and produce hydrogen. Moreover, because the particles are suspended in the hydrophobic liquid, the fuel precursor is pumpable, which facilitates handling and storage.

The aluminium particles in the fuel precursor can be produced by wet-ball milling aluminium feedstock particles under an inert atmosphere, such as argon or nitrogen atmosphere. For example, a Retsch PM100^{™} planetary ball mill can provide high energy levels for the milling and has a grinding chamber which is purgeable with inert gas. The feedstock can be any suitable stock metal, recycled aluminium or swarf. The aluminium itself can be pure aluminium or an aluminium alloy.

Conveniently, the solvent used for the wet-ball milling is the same hydrophobic liquid in which the aluminium particles are suspended in the fuel precursor. After wet-ball milling, a desired loading of particles in the fuel precursor can be achieved by adding more hydrophobic liquid or removing liquid. In general, the higher the loading the higher the hydrogen-producing potential of the fuel precursor. On the other hand, above a certain loading, which is generally about 80% or 85% by volume, the aluminium particles will come into greater contact with each other, and eventually the fuel precursor ceases behaving as liquid, and becomes a wet granular agglomerate. Typically, loadings in the range 35% to 80% by volume are aimed for, with loadings of at least 65%, and preferably at least 70% or 75%, advantageously providing substantially higher loadings than those associated with randomly close packed uniform spheres.

The effect of wet-ball milling on the aluminium feedstock is to produce non-spherical, angular aluminium particles with fresh, non-oxidised surfaces that can react with water even without activation by gallium-indium eutectic. These particles can be more closely packed in the liquid than spherical particles to increase the aluminium loading of the fuel precursor. To increase the surface to volume ratio of the particles, and thus to increase the amount of hydrogen that can be formed from a given particle before the reaction with water passivates the surface of the particles, the particles are preferably nanoparticles, i.e. substantially all of the suspended particles have a diameter of 100 nm or less. With such particle sizes it is possible for most, if not all, of the aluminium of each particle to react with water, whereby reaction extents of greater than 90% are achievable. Indeed, small particle sizes allow 100% reaction extents to effectively be obtained.

The hydrophobic liquid can be selected so that it is volatilised by the exothermic reaction with water, e.g. when it is pumped into a reaction vessel containing water. The vapour thus produced can be removed from reaction zone in a gas line in a gas mixture which also contains the hydrogen from the reaction. In this way, hydrophobic liquid is prevented from building up in the reaction vessel. In addition, the gas mixture may be directed into a condenser where the hydrophobic liquid condenses out for storage or recycling. Typically, the hydrogen continues on to a fuel cell where it used to generate electricity but without entraining the hydrophobic liquid vapour which could reduce the effectiveness of the cell. Thus the hydrophobic liquid can be chosen such that it has a boiling point that allows it vaporise in the reaction zone, but also allows it to readily condense in the condenser. For example the boiling point may be at last 60°C and/or at most 100°C. Other considerations for the hydrophobic liquid are good hydrophobicity, safe chemistry, and rheological properties that provide the fuel precursor with desirable flow characteristics. For example, the hydrophobic liquid can be hexane or ethyl acetate. Other options for the hydrophobic liquid are mineral oil and ethylene glycol, although these have significantly higher boiling points than 100°C, and thus may require other engineering solutions for avoiding build-up of excess hydrophobic liquid in a reaction vessel and maintain a desired particle volume loading, such as a continuous cycle of fluid removal from the vessel, filtration and return.

By way of example, Figure 1 shows a process flow chart for producing the liquid fuel precursor and using hydrogen fuel produced from the precursor in a fuel cell. In a first stage of the process, the liquid fuel precursor is produced in a ball mill 1 under an inert gas from solid aluminium and a hydrophobic solvent (liquid). Next the fuel precursor is reacted with water in a reaction vessel 2. This results in a mixture of produced hydrogen and the solvent which is removed as one stream from the reaction vessel 2, and aluminium oxides and hydroxides which are removed as another stream from the vessel. The solvent is extracted from the mixture in a condenser 3 and returned to the first stage to be used in the production of more fuel precursor. The hydrogen is sent on from the condenser 3 to a fuel cell 4 where it is reacted with oxygen to generate electricity.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

### References

A number of publications are cited above in order to more fully describe and disclose the invention and the state of the art to which the invention pertains. Full citations for these references are provided below.
J. Petrovic and G. Thomas, Reaction of Aluminum with Water to Produce Hydrogen: A Study of Issues Related to the Use of Aluminum for On-Board Vehicular Hydrogen Storage. US Department of Energy, Version 2, 2010. https://www1.eere.energy.gov/hydrogenandfuelcells/pdfs/aluminium_water_hydrogen.pdf
J T. Slocum, T.W. Eagar, R. Taylor and D.P. Hart, Activation of bulk aluminum and its application in a hydrogen generator, Applied Energy, Volume 279, 1 December 2020.

## Claims

1. A fuel precursor for producing hydrogen fuel by reacting aluminium and water, the fuel precursor having aluminium particles suspended in a hydrophobic liquid such that when the fuel precursor is introduced to water, the suspended aluminium particles migrate to the water and react therewith to produce hydrogen, wherein:
the suspended aluminium particles are non-spherical, angular particles; and
the surfaces of the suspended aluminium particles have substantially no oxide layer thereon.

2. The fuel precursor according to claim 1, wherein the suspended aluminium particles are produced by wet-ball milling aluminium feedstock particles.

3. The fuel precursor according to claim 2, wherein the wet-ball milling is performed under an inert atmosphere that substantially prevents an oxide layer forming on the fresh aluminium surfaces produced by the wet-ball milling.

4. The fuel precursor according to claim 2 or 3, wherein the liquid wet-ball milling is performed using a solvent which is the hydrophobic liquid of the liquid fuel-precursor.

5. The fuel precursor according to any one of the previous claims, wherein the suspended aluminium particles are nanoparticles.

6. The fuel precursor according to any one of the previous claims, wherein the suspended aluminium particles have a volume loading relative to the total volume of aluminium particles and hydrophobic liquid of at least 65%.

7. The fuel precursor according to any one of the previous claims, wherein the hydrophobic liquid has a boiling point of at least 60°C.

8. The fuel precursor according to any one of the previous claims, wherein the hydrophobic liquid has a boiling point of at most 100°C.

9. The fuel precursor according to any one of the previous claims, wherein the hydrophobic liquid is mineral oil, ethylene glycol, hexane or ethyl acetate.

10. A method of producing the fuel precursor of any one of the previous claims, the method including:
providing a mixture of aluminium feedstock particles in a solvent which is a hydrophobic liquid; and
wet ball milling the mixture under an inert atmosphere to produce the fuel precursor in which non-spherical, angular aluminium particles are suspended in the hydrophobic liquid, the suspended aluminium particles having substantially no oxide layer thereon.

11. The method of claim 10 further including:
adding or removing hydrophobic liquid to adjust the loading of the suspended aluminium particles in the hydrophobic liquid.

12. A method of producing hydrogen fuel, the method including:
providing the fuel precursor of any one of claims 1 to 9; and
introducing the fuel precursor to water, such that the aluminium particles migrate to the water and react therewith to produce hydrogen.

13. The method of claim 10 wherein the hydrophobic liquid is volatilised when the fuel precursor is introduced to water, and the method further includes:
removing a mixture of the produced hydrogen and the volatilised hydrophobic liquid; and
condensing the hydrophobic liquid to remove it from the mixture.

## Patentansprüche

1. Kraftstoffvorläufer zum Erzeugen von Wasserstoffkraftstoff durch Umsetzen von Aluminium und Wasser, wobei der Kraftstoffvorläufer Aluminiumpartikel aufweist, die in einer hydrophoben Flüssigkeit suspendiert sind, sodass, wenn der Kraftstoffvorläufer in Wasser eingebracht wird, die suspendierten Aluminiumpartikel in das Wasser wandern und damit reagieren, um Wasserstoff zu erzeugen, wobei:
die suspendierten Aluminiumpartikel nichtsphärische, eckige Partikel sind; und
die Oberflächen der suspendierten Aluminiumpartikel im Wesentlichen keine Oxidschicht darauf aufweisen.

2. Kraftstoffvorläufer nach Anspruch 1, wobei die suspendierten Aluminiumpartikel durch Nasskugelmahlen von Aluminium-Einsatzpartikeln hergestellt werden.

3. Kraftstoffvorläufer nach Anspruch 2, wobei das Nasskugelmahlen unter einer inerten Atmosphäre durchgeführt wird, die im Wesentlichen verhindert, dass sich eine Oxidschicht auf den durch das Nasskugelmahlen erzeugten frischen Aluminiumoberflächen bilden.

4. Kraftstoffvorläufer nach Anspruch 2 oder 3, wobei das flüssige Nasskugelmahlen unter Verwendung eines Lösungsmittels durchgeführt wird, bei dem es sich um die hydrophobe Flüssigkeit des flüssigen Kraftstoffvorläufers handelt.

5. Kraftstoffvorläufer nach einem der vorhergehenden Ansprüche, wobei die suspendierten Aluminiumpartikel Nanopartikel sind.

6. Kraftstoffvorläufer nach einem der vorhergehenden Ansprüche, wobei die suspendierten Aluminiumpartikel eine Volumenbeladung relativ zu dem Gesamtvolumen der Aluminiumpartikel und der hydrophoben Flüssigkeit von mindestens 65 % aufweisen.

7. Kraftstoffvorläufer nach einem der vorhergehenden Ansprüche, wobei die hydrophobe Flüssigkeit einen Siedepunkt von mindestens 60 °C aufweist.

8. Kraftstoffvorläufer nach einem der vorhergehenden Ansprüche, wobei die hydrophobe Flüssigkeit einen Siedepunkt von höchstens 100 °C aufweist.

9. Kraftstoffvorläufer nach einem der vorhergehenden Ansprüche, wobei die hydrophobe Flüssigkeit Mineralöl, Ethylenglycol, Hexan oder Ethylacetat ist.

10. Verfahren zum Erzeugen des Kraftstoffvorläufers nach einem der vorhergehenden Ansprüche, wobei das Verfahren Folgendes einschließt:
Bereitstellen eines Gemisches aus Aluminium-Einsatzpartikeln in einem Lösungsmittel, das eine hydrophobe Flüssigkeit ist; und
Nasskugelmahlen des Gemisches unter einer inerten Atmosphäre, um den Kraftstoffvorläufer zu erzeugen, in dem nichtsphärische, eckige Aluminiumpartikel in der hydrophoben Flüssigkeit suspendiert sind, wobei die suspendierten Aluminiumpartikel im Wesentlichen keine Oxidschicht darauf aufweisen.

11. Verfahren nach Anspruch 10, ferner einschließend:
Hinzufügen oder Entfernen hydrophober Flüssigkeit, um die Beladung der suspendierten Aluminiumpartikel in der hydrophoben Flüssigkeit einzustellen.

12. Verfahren zum Erzeugen von Wasserstoffkraftstoff, wobei das Verfahren Folgendes einschließt:
Bereitstellen des Kraftstoffvorläufers nach einem der Ansprüche 1 bis 9; und
Einbringen des Kraftstoffvorläufers in Wasser, sodass die Aluminiumpartikel in das Wasser wandern und damit reagieren, um Wasserstoff zu erzeugen.

13. Verfahren nach Anspruch 10, wobei die hydrophobe Flüssigkeit verflüchtigt wird, wenn der Kraftstoffvorläufer in Wasser eingebracht wird, und das Verfahren ferner Folgendes einschließt:
Entfernen eines Gemisches aus dem erzeugten Wasserstoff und der verflüchtigten hydrophoben Flüssigkeit; und
Kondensieren der hydrophoben Flüssigkeit, um sie aus dem Gemisch zu entfernen.

## Revendications

1. Précurseur de combustible pour produire un combustible à hydrogène par réaction de l'aluminium et de l'eau, le précurseur de combustible comportant des particules d'aluminium en suspension dans un liquide hydrophobe de sorte que lorsque le précurseur de combustible est introduit dans l'eau, les particules d'aluminium en suspension migrent vers l'eau et réagissent avec celle-ci pour produire de l'hydrogène, dans lequel :
les particules d'aluminium en suspension sont des particules angulaires non sphériques ; et
les surfaces des particules d'aluminium en suspension ne comportent sensiblement pas de couche d'oxyde sur elles.

2. Précurseur de combustible selon la revendication 1, dans lequel les particules d'aluminium en suspension sont produites par broyage à boulets humides de particules de charge d'alimentation en aluminium.

3. Précurseur de combustible selon la revendication 2, dans lequel le broyage à boulets humides est effectué sous une atmosphère inerte qui empêche sensiblement la formation d'une couche d'oxyde sur les surfaces en aluminium frais produites par le broyage à boulets humides.

4. Précurseur de combustible selon la revendication 2 ou 3, dans lequel le broyage liquide à boulets humides est effectué en utilisant un solvant qui est le liquide hydrophobe du précurseur de combustible liquide.

5. Précurseur de combustible selon l'une quelconque des revendications précédentes, dans lequel les particules d'aluminium en suspension sont des nanoparticules.

6. Précurseur de combustible selon l'une quelconque des revendications précédentes, dans lequel les particules d'aluminium en suspension comportent une charge volumique par rapport au volume total de particules d'aluminium et de liquide hydrophobe d'au moins 65 %.

7. Précurseur de combustible selon l'une quelconque des revendications précédentes, dans lequel le liquide hydrophobe comporte un point d'ébullition d'au moins 60° C.

8. Précurseur de combustible selon l'une quelconque des revendications précédentes, dans lequel le liquide hydrophobe comporte un point d'ébullition d'au plus 100° C.

9. Précurseur de combustible selon l'une quelconque des revendications précédentes, dans lequel le liquide hydrophobe est une huile minérale, de l'éthylène glycol, de l'hexane ou de l'acétate d'éthyle.

10. Procédé de production du précurseur de combustible selon l'une quelconque des revendications précédentes, le procédé comprenant :
la fourniture d'un mélange de particules de charge d'alimentation en aluminium dans un solvant qui est un liquide hydrophobe ; et
le broyage à boulets humides du mélange sous une atmosphère inerte pour produire le précurseur de combustible dans lequel des particules d'aluminium angulaires non sphériques sont en suspension dans le liquide hydrophobe, les particules d'aluminium en suspension ne comportant sensiblement pas de couche d'oxyde sur celles-ci.

11. Procédé selon la revendication 10, comprenant en outre :
l'ajout ou l'élimination de liquide hydrophobe pour ajuster la charge des particules d'aluminium en suspension dans le liquide hydrophobe.

12. Procédé de production de combustible à hydrogène, le procédé comprenant :
la fourniture du précurseur de combustible selon l'une quelconque des revendications 1 à 9 ; et
l'introduction du précurseur de combustible dans l'eau, de sorte que les particules d'aluminium migrent vers l'eau et réagissent avec celle-ci pour produire de l'hydrogène.

13. Procédé selon la revendication 10, dans lequel le liquide hydrophobe est volatilisé lorsque le précurseur de combustible est introduit dans de l'eau, et le procédé comprend en outre :
l'élimination d'un mélange de l'hydrogène produit et du liquide hydrophobe volatilisé ; et
la condensation du liquide hydrophobe pour l'éliminer du mélange.
